# EUROPEAN PATENT APPLICATION

(11) **EP 4 279 520 A1**
(43) Date of publication of application: **22.11.2023**
(21) Application number: 22305755.5
(22) Date of filing: 20.05.2022
(51) Int. Cl.: C08G 18/08, C08G 18/73, C08L 75/04, C09D 5/02, C09D 175/04, C08L 31/00, C08L 33/00, C08L 63/00, C09J 175/04

(54) **KIT FOR ADHESIVE OR COATING COMPOSITION**

(71) Applicant: Bostik SA, 92700 Colombes (FR)
(72) Inventor: LI, Yong, 201108 SHANGHAI (CN); CAI, Xiao Feng, 201108 SHANGHAI (CN)
(74) Representative: Arkema Patent

(57) **Abstract**

The invention relates to a kit comprising a component (A) comprising an aqueous dispersion comprising at least one polymer; a component (B) comprising at least one curing agent; and a component (C) comprising at least one coloring agent. The invention further relates to the use of the kit as an adhesive or a coating. The invention also relates to a method for bonding two substrates or for coating a surface of a substrate comprising mixing the components A, B, C, as well as to an article obtained by the use or the method.

## Description

### TECHNICAL FIELD

The present invention relates to a kit and the uses of said kit as adhesive or coating composition. The invention also relates to a method for bonding substrates or for coating a substrate, and articles made with this method.

### TECHNICAL BACKGROUND

At present, two-component (also designated as "2K", two-pack or two-part) adhesives and coatings are widely used in various application fields, such as automotive, furniture, construction, packaging, etc. They can be solvent-based or waterborne. Recently there are more research and developments on waterborne or aqueous two-component curing systems as they are more environmental-friendly with low volatile organic compounds (VOC) values.

In the automotive industry for producing interior trim equipment, a commonly used aqueous two-component adhesive comprises a water-based polyurethane dispersion (component A) and an emulsifiable isocyanate curing agent (component B), the latter being also called "hardener". These two components are mixed on the car manufacturing site, before being applied on the substrates to be bonded. In order to make the 2K adhesive easy to spot on site (namely, to identify which area has already been applied with the adhesive, which area not), the mixed adhesive needs to have color. The most usual color is blue or red.

An already dispersed color paste can be added into the polyurethane dispersion as a part of component A. The problem of making color being a part of component A is that, because component A takes up the majority of the mixture of component A and component B, when it is mixed with the hardener, component B, it is not easy to judge from the appearance of the mixture whether the two components A and B are mixed homogeneously enough.

On the other hand, making color as a part of component B is not easy. Color pastes cannot be simply mixed into component B since they generally contain compounds which may react with component B. In particular, isocyanates are highly reactive; notably, if water is contained in the color paste, said water may react with the hardener upon storage. The hardener may in fact get unusable approximately three days after mixing with a water-based color dye. Therefore, in order to make color being a part of component B, it may be necessary to dissolve the color dye in a water-free solvent to firstly form a solvent-based color paste. It is then necessary to control the water content of the color dye to a low level, and the solvent must be carefully selected so as not to react with component B. Normally, the solvent is chosen to be a solvent with a high boiling point such as 1-methoxy-2-propyl acetate and propylene carbonate. The solvent-based color paste is then mixed together with the hardener to make an even colored component B. Normally, the amount of solvent used in component B is within the range of 10-20 wt%. Because component B is the minority part of the mixture, one benefit of this approach is that it is easy to judge the homogeneously mixed state from the color change of the mixture. However, one drawback of this approach is the need to add solvent in component B. As a result, the adhesive mixture containing solvents may not comply with the health and environmental legislation aimed at reducing VOC.

Both of the above two practices have been in the industry for many years. With the first method (adding color to component A), customers/users have difficulty in judging how well the components have been mixed. With the second method (adding color to component B), although it is easy to judge from the appearance change to see how well the components have been mixed, the adhesive mixture may not comply with the limit of VOC in adhesives, such as Chinese national standard GB33372-2020 which specifies the limit of VOC content in water-based adhesives as 50 g/L.

Therefore, there is a need for providing an environmentally friendly adhesive or coating composition with color which has a low or zero VOC content and which allows easy application for a user, while maintaining good adhesion or coating properties.

### SUMMARY OF THE INVENTION

It is a first object of the invention to provide a kit comprising:
- a component (A) comprising an aqueous dispersion comprising at least one polymer;
- a component (B) comprising at least one curing agent; and
- a component (C) comprising at least one coloring agent.

According to some embodiments, the kit comprises:
- 100 parts by mass of the component (A);
- 2 to 10 parts, preferably 3 to 8 parts, and more preferably 3 to 7 parts by mass of the component (B); and
- 0.05 to 1 parts, preferably 0.08 to 0.9 parts, and more preferably 0.1 to 0.8 parts by mass of the component (C).

According to some embodiments, the polymer of the component (A) comprises at least one of polyurethane, polyacrylate, vinyl-based copolymer, and epoxy resin.

According to some embodiments, the polymer of the component (A) comprises a combination of polyurethane and vinyl acetate-ethylene.

According to some embodiments, the curing agent of the component (B) comprises an isocyanate compound.

According to some embodiments, the curing agent of the component (B) comprises a silane compound.

According to some embodiments, the three components (A, B, C), in combination, have a total content of volatile organic compound (VOC) of less than 10 g/L, preferably less than 5 g/L.

According to some embodiments, the component (C) is in liquid form.

According to some embodiments, the component (A) and/or the component (C) comprises one or more additives selected from biocides, pH adjusting agents, defoaming agents, wetting agents, thickening agents, fillers, and mixtures thereof.

According to some embodiments, the three components (A, B, C) are in separate containers.

It is a second object of the invention to use the kit described above, as an adhesive for bonding two substrates together.

It is a further object of the invention to use the kit described above, as a coating for coating a surface of a substrate.

It is a further object of the invention to provide a method for bonding two substrates or for coating a surface of a substrate, comprising:
- mixing together a component (A) comprising an aqueous dispersion comprising at least one polymer, a component (B) comprising at least one curing agent, and a component (C) comprising at least one coloring agent;
- applying said mixture on a surface of a substrate; and
- optionally bringing said surface into contact with a surface of an additional substrate.

According to some embodiments, the three components (A, B, C) are as provided by the kit described above.

It is a further object of the invention to provide an article comprising at least one layer formed by the use or the method described above.

The present invention makes it possible to address the need mentioned above. In particular the invention provides an environmentally friendly adhesive or coating composition with color which has a low or zero VOC content and which allows easy application for a user.

This is achieved by a kit comprising a component A comprising an aqueous dispersion comprising at least one polymer; a component B comprising at least one curing agent; and a component C comprising at least one coloring agent. In other words, the conventional two-component composition is replaced by a three-component composition.

Component C comprising at least one coloring agent is mixed together with components A and B on site. As component C which gives color to the mixture normally constitutes a relatively small part of the entire mixture, a user can easily know by the color change that the mixture is homogeneous enough. Namely, an even color of the mixture means that the mixture is homogeneous and ready to apply.

Further, the mixture of the three components A, B, C may have a zero or low VOC content as a solvent is not required to disperse the coloring agent. It is thus possible to obtain a water-based adhesive or coating composition which meets VOC limits set by various regulations. In the conventional approach as explained above, a solvent must be used to provide a colored hardener. If a color dye is directly mixed in the hardener, either a solvent must be added, or water must be present and thus react with the hardener upon storage, thus making the hardener denatured and unusable before application on site. In contrast, the present invention does not require a solvent for pre-mixing the coloring agent. The three components A, B, C are to be mixed on site and to be subject to application shortly.

Advantageously, the composition obtained by the kit of the invention has good adhesive or coating properties, at least because the mixing of the three components can be homogeneously enough, which is easily judged from the appearance of the mixture by the user/customer.

Furthermore, the composition obtained by the kit of the invention is advantageously compatible with a variety of substrates, including various plastics, rubber, fiber cloth, ceramics, concretes, metal, wood, particle boards, chipboards, for example.

### DESCRIPTION OF EMBODIMENTS

The invention will now be described in more detail without limitation in the following description.

The invention relates to a kit comprising a first part (component A), a second part (component B), and a third part (component C).

### Component A

Component A comprises an aqueous dispersion comprising at least one polymer.

According to preferred embodiments, the polymer in the aqueous dispersion of component A (also referred to as "base polymer") may comprise at least one of polyurethane, polyacrylate, vinyl-based copolymer, and epoxy resin.

According to preferred embodiments, component A may comprise a polyurethane dispersion (PUD) and a vinyl-based copolymer emulsion. The combination use of the PUD and the vinyl-based copolymer emulsion may achieve improved properties for the resulting adhesive or coating composition, and may also lead to a lower cost.

In some embodiments, the PUD may comprise polyurethane-based particles. The polyurethanes may be obtained by a reaction of polyisocyanates, polymeric polyols and other optional monomers. According to a preferred embodiment, the PUD may comprise an anionic aliphatic polyurethane. The PUD may be prepared or directly purchased from suppliers on the market, such as Dispercoll^{®} U54 available from Covestro.

In some embodiments, the vinyl-based copolymer may be prepared by a vinyl monomer and a copolymerizable monomer selected from the group consisting of vinyl acetate, vinyl chloride, vinylidene chloride, styrene, alkyl acrylate, and combinations thereof. In a preferred embodiment, the vinyl-based copolymer emulsion may comprise a copolymer of vinyl acetate and ethylene, i.e., vinyl acetate-ethylene (VAE) copolymer. The VAE copolymer may be prepared by copolymerization of vinyl acetate and ethylene, with a vinyl acetate content of 60-95 wt%, and an ethylene content of 5-40 wt%, based on the total weight of the monomers. The VAE copolymer may be purchased from suppliers on the market, such as Vinnapas^{®} 645 available from Wacker.

In some embodiments, the component A may further comprise one or more additives. Such additives can be selected from biocides, pH adjusting agents, defoaming agents, wetting agents, thickening agents, fillers, and mixtures thereof. The total amount of the optional additive(s) may usually be less than 5 wt%, based on the total weight of the component A, preferably less than 4 wt%, and more preferably in a range from 0.01 to 3 wt%.

The component A may have a solid content in a range of from 30 to 60 wt%, preferably from 35 to 55 wt%, and more preferably from 40 to 52 wt%. The solid content is measured by placing 1g sample in an oven of 105°C for 1 hour and weighing the remaining mass.

Preferably, component A does not contain any coloring agent, colorant, dye, pigment, or toner. This does not exclude the possibility that component A may have its own natural color.

The above-mentioned compounds (one or more polymers and optionally additive(s)) may be mixed together to make a packaged compound A, which may be included in a kit.

### Component B

Component B comprises at least one curing agent.

Curing is a process to transform resins from liquid state to a solid or high viscosity state. Curing can be initiated by UV light, moisture, or curing agents. In the present patent application, the curing agent is also called a hardener or crosslinking agent.

The curing agent of component B may comprise any compound(s) which initiate(s) a crosslinking or curing reaction with functional groups present on the at least one polymer (base polymer) of component A, when components A and B are mixed together. The said curing reaction can be a chemical reaction of condensation, ring closure, addition or catalysis to make the thermosetting resin undergo irreversible change. Such curing agent may be appropriately chosen depending on the polymer contained in component A. The type of curing agent may greatly affect the mechanical properties, heat-resistance, water-resistance and corrosion resistance of the cured product, e.g., adhesive layer of coating layer.

In the adhesive and coating industries, commonly used curing mechanisms include polyol/isocyanate reaction and H₂O/silane reaction. For example, the curing agent of component B may comprise an isocyanate compound, or a silane compound.

As disclosed in this application, an isocyanate compound refers to a compound containing at least two isocyanate groups (-NCO) which can react with hydroxyl functional groups and/or amine function groups of the compounds in component A to form urethane linkages. A compound containing three or more isocyanate groups is called a polyisocynate.

In some embodiments, the component B may comprise at least one solvent-based isocyanate compound, at least one emulsifiable or water-dispersible isocyanate compound, or a combination thereof. As the component A of the kit comprises an aqueous dispersion, the component B may comprise at least one emulsifiable or water-dispersible isocyanate compound to achieve better compatibility.

According to preferred embodiments, component B may comprise an aliphatic and/or aromatic polyisocyanate. For example, the polyisocyanate may be purchased from suppliers on the market, such as Desmodur^{®} DN available from Covestro.

According to preferred embodiments, the component B may comprise an organofunctional silane compound such as an amino silane or epoxy silane.

In some embodiments, the component B comprises at least one epoxy silane. The said epoxy silane is well known to one skilled in the art and is commercially available on the market (e.g., CoatOSil^{®} MP 200, which is available from MOMENTIVE). The epoxy silane may comprise at least two glycidoxy groups, preferably at least three glycidoxy groups. The glycidoxy group has a formula shown below:

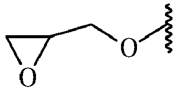

Preferably, the component B does not contain any coloring agent, colorant, dye, pigment, or toner. This does not exclude the possibility that component B may have its own natural color.

Preferably, component B is water-free or contains an amount of water of less than 1 wt%, based on the total weight of the component B, preferably less than 0.5 wt%, more preferably less than 0.1 wt%, even more preferably less than 0.05 wt%, ideally less than 0.01 wt%.

### Component C

Component C comprises at least one coloring agent.

The coloring agent may be chosen so that it gives any color to the final mixture of three components A, B, C which allows a user to know that the mixture is homogenous and ready for application.

The coloring agent may comprise one or more inorganic and/or organic pigments, dyes or lakes.

The pigments can be self-dispersed pigments, polymer-coated pigments, or common pigments such as milled pigments, for example. A separate dispersing agent may be used to enable appropriate suspension of the coloring agent in component C. The coloring agent can be of any color including, but not limited to, black, blue, brown, cyan, green, white, violet, magenta, red, orange and yellow, as well as spot colors from mixtures thereof. Red and blue are preferred colors.

Examples of organic pigments that may be present in component C include, by way of illustration, perylene, phthalocyanine pigments (for example, phthalo green, phthalo blue), cyanine pigments (Cy3, Cy5, and Cy7), naphthalocyanine pigments, nitroso pigments, mono-azo pigments, di-azo pigments, di-azo condensation pigments, basic dye pigments, alkali blue pigments, blue lake pigments, phloxin pigments, quinacridone pigments, iso-indolinone pigments, di-oxazine pigments, carbazole di-oxazine violet pigments, alizarine lake pigments, phthaloxy amine pigments, carmine lake pigments, tetrachloroisoindolinone pigments, perinone pigments, thio-indigo pigments, anthraquinone pigments and quinophthalone pigments, and mixtures of two or more of the above and derivatives of the above. Inorganic pigments that may be present in component C, include, for example, metal oxides (for example, titanium dioxide, electrically conductive titanium dioxide, iron oxides (e.g., red iron oxide, yellow iron oxide, black iron oxide and transparent iron oxides), aluminum oxides, silicon oxides), carbon black pigments (e.g., furnace blacks), metal sulfides, metal chlorides, and mixtures of two or more thereof.

Examples of coloring agents that may be employed include, by way of illustration and not limitation, yellow pigments having the following Yellow Pigment color index PY83, PY151, PY150, PY155, PY139, PY120, PY180, PY129 and PY154, PY213; magenta pigments composed of Red pigment having color indices of PR202, PR254, PR122, PR149, PR185, PR255, PR146; violet pigments having color indices of PV19, PV23, PV37 and PV29; blue pigments having color indices of PB15:3, PB15:4, PB15:2 and PB15:1; black pigments having a color index of PBL Black 7. Inorganic pigments such as a white pigment of the type TiO₂ also may be used. Orange pigments having color indices of PO46, PO64, PO34 as well as green pigments having a color index of PG7 also may be employed.

The pigment can be a dispersible pigment, such as, for example those available under the trade names Paliotol^{®}, Heliogen^{®}, Chromophtal^{®}, Irgalite^{®}, Cinquasia^{®} (available from BASF), Hostaperm^{®}, Novoperm^{®} (available from Clariant), Sunfast^{®}, Quindo^{®} (available from SunChemical), Special Black (available from Degussa), Kronos^{®} (available from Kronos), Kemira^{®} (available from Kemira Pigments) and Colortrend^{®} (available from Chromaflo).

According to preferred embodiments, component C may have a content of volatile organic compound (VOC) of less than 10 g/L, preferably less than 5 g/L, more preferably less than 2 g/L, even more preferably less than 1 g/L. More preferably, the coloring agent may be VOC free. As disclosed in this application, VOC values are measured according to GB33372-2020.

According to preferred embodiments, the coloring agent may be in liquid form, for example a color paste. The coloring agent in liquid form can be more easily mixed with components A and B compared with solid or powder coloring agents.

For example, the coloring agent may be purchased from suppliers on the market, such as 870-0825 Hp Red or 870-7222 Phthalo Blue both available from Chromaflo.

In some embodiments, the component C may further comprise one or more additives. Such additives can be selected from biocides, pH adjusting agents, defoaming agents, wetting agents, thickening agents, fillers, and mixtures thereof.

In some embodiments, the component C is preferably in liquid form.

### Kit of three components

A kit according to the invention comprises three components A, B, C as described above.

According to an embodiment of the present application, the kit comprises:
- 100 parts by mass of the component (A);
- 2 to 10 parts, preferably 3 to 9 parts, and more preferably 4 to 8 parts by mass of the component (B); and
- 0.05 to 5 parts, preferably 0.05 to 2 parts, and more preferably 0.05 to 1 parts by mass of the component (C).

The content of component C may be increased if a user prefers the color more visible.

For example, the kit may comprise 20 kg of component A (total content of the polymer(s) and optionally additives), 1 kg of component B (total content of the curing agent/hardener), and 20 g or 10 g of component C (coloring agent and optionally additives).

According to preferred embodiments, three components A, B, C may be contained, stored, or packaged in separate containers respectively, and such separate containers of three components may be optionally packaged together. Each container may for example independently be a canister, bucket, pot, tube or syringe. The containers may be packaged together by a sealing or plastic foil or box, or any other form of packaging. Alternatively, the containers may be provided separately without any common packaging.

Alternatively, the kit may comprise further sub-kits therein each of which may comprise one or two of the three components A, B, C. Namely, for example a first sub-kit including component A and component B (their respective containers being packaged together) is provided, whereas a second sub-kit including component C is provided in an independent packaging, so that the first and second sub-kits constitute the kit according to the invention. Other combinations, for example a sub-kit of components B and C, and another sub-kit of component A, or a sub-kit of components A and C and another sub-kit of component B may also be contemplated.

Besides the packaged three components A, B, C, the kit according to the invention may be accompanied by any further accessory elements, for example tools for facilitating mixing or application such as a stirrer, a spatula and a brush, and/or optional further additive(s), which may be separately packaged or which may be packaged together with the containers of components A, B and C.

### Use of the kit and the mixture obtained by mixing the three components

The three components A, B, C as described above are mixed together before application. The three components are to be mixed until the color given by the coloring agent of component C is blended or integrated well into the entire mixture and the mixture has an even, homogeneous color. The components A, B and C are preferably provided from a kit as described above. Alternatively, these components may be obtained partly or totally separately.

Any method may be employed for mixing the three components. For example, the three components may be mixed using a mechanical stirrer, preferably at a stirring speed 300-500 rpm for a period of time from 1 min to 30 min, more preferably from 5 to 15 min.

According to preferred embodiments, the three components A, B, C may be added and mixed together substantially all at once. Alternatively, components A and B may be first mixed together, followed by further adding component C in the mixture. The three components A, B, C may be added and mixed one by one in no specific order.

Preferably, the resulting mixture obtained by mixing the three components A, B, C is VOC-free or have a content of VOC of less than 10 g/L, preferably less than 5 g/L, more preferably less than 2 g/L, even more preferably less than 1 g/L, as measured according to GB33372-2020.

When components A and B are mixed, the at least one polymer of component A (base polymer) and the curing agent of component B may react with each other, resulting in a crosslinking or curing. Such crosslinking or curing reaction as such is known in the art of the 2K adhesives.

Preferably, mixing of the three components A, B, C is performed within 24 hours, preferably within 12 hours, more preferably within 1 hour, even more preferably from 30 min to 5 min before application of the mixture to a surface(s). For example, the mixture may be applied to a surface(s) substantially immediately after mixing the three components A, B, C.

According to some embodiments, the mixture obtained by mixing three components A, B, C according to the invention may be used as an adhesive composition, in order to bond two substrates together. Thus, after crosslinking, the mixture can form an adhesive layer maintaining two substrates together. More particularly, after coating the mixture on a surface of a substrate, a surface of an additional substrate can be brought into contact with the coated surface, so as to bond the two substrates.

According to other embodiments, the mixture obtained by mixing three components A, B, C according to the invention can be used as a coating on a surface of a substrate. Thus, after crosslinking, the mixture can form a layer covering the surface of the substrate in order, for example, to modify one or more properties of its surface.

Thus, articles manufactured after application of the mixture according to the invention comprise at least one layer or surface coated with the mixture.

When the mixture is used as a coating, it may be an outer surface of the article.

When the mixture is used as an adhesive, it may be an internal surface of the article, i.e. a surface of the article that is in contact with, for example, another surface of the article, and the mixture lying between these two surfaces.

The mixture obtained by mixing three components A, B, C according to the invention is well suited for variety of substrates, such as plastics (e.g., thermoplastic material), rubber, metal (e.g., steel, aluminum), wood, paper, cardboard, ceramic, and glass, textile, fabric, leather, mineral foundations etc. Examples of the thermoplastic material include high impact polystyrene (HIPS), acrylonitrile-butadiene-styrene (ABS), styrene-acrylonitrile (SAN), polyvinyl chloride (PVC), polycarbonate (PC), high density polyethylene (HDPE), and polyphenylene oxide (PPO). In some other embodiments, the substrate may have a base coat thereon and the mixture according to the invention is formed on the base coat of the substrate to form a topcoat.

### EXAMPLES

The following examples illustrate the invention without limiting it.

### Examples 1-6

The mixtures of examples 1-6 were prepared, with the combination of components A, B, C as shown in Table 2. The detailed specifications of the compositions/materials used are given in Table 1.

**Table 1**

| Name | Supplier | Spec | Function |
|---|---|---|---|
| Dispercoll^{®} | Covestro | 50% in solid, | Backbone strength |
| U54 | | 40~600cps, pH 6-9 | |
| Vinnapas^{®} | Wacker | 55% in solid, | Better substrates adaptability |
| 645 | | 5000-10000 cps, pH 4-6 | |
| Preventol^{®} | Lanxess | specific gravity@20°C | Biocide |
| D7 | | 1.024 | |
| AMP 95 | Dow | specific gravity@25°C | PH adjuster |
| | | 0.942 | |
| Antifoam | Rhodia | specific gravity@25°C | Defoamer |
| 691 | | 0.85 | |
| Hydropalat^{®} | BASF | pH -6.5, | Wetting agent |
| WE3475 | | solid content~75% | |
| DeuRheo^{®} | Elementics | 49.5%-53.5% in solid, | Polyurethane based thickener |
| WT-108F | | 3000-8000 cps | |
| 870-0825 | Chromaflo | specific gravity@25°C | Coloring agent |
| Hp Red | | 1.40, VOC: 0g/L | |
| 870-7222 | Chromaflo | specific gravity@25°C | Coloring agent |
| Phthalo Blue | | 1.21, VOC: 0g/L | |
| Desmodur^{®} | Covestro | NCO content: 21.8, | Hardener |
| DN | | Viscosity 1250 cps, | |
| | | Solid content: 100% | |

**Table 2**

| Formula Component | Composition | 1 | 2 | 3 | 4 | 5 | 6 |
|---|---|---|---|---|---|---|---|
| A | Dispercoll^{®} U54 | 50 | 30 | 70 | 70 | 30 | 70 |
| A | Vinnapas^{®} 645 | 50 | 70 | 30 | 30 | 70 | 30 |
| A | Preventol^{®} D7 | 0.1 | 0.1 | 0.1 | 0.1 | 0.1 | 0.1 |
| A | AMP 95 | 0.05 | 0.05 | 0.05 | 0.05 | 0.05 | 0.05 |
| A | Antifoam 691 | 0.1 | 0.1 | 0.1 | 0.1 | 0.1 | 0.1 |
| A | Hydropalat^{®} WE3475 | 0.2 | 0.2 | 0.2 | 0.2 | 0.2 | 0.2 |
| A | DeuRheo^{®} WT-108F | 0.15 | 0.15 | 0.15 | 0.15 | 0.15 | 0.15 |
| B | Desmodur^{®} DN | 5 | 5 | 5 | 5 | 5 | 5 |
| C | 870-8025 Hp Red | 0.05 | 0.05 | 0.05 | - | 0.1 | - |
| C | 870-7222 Phthalo Blue | - | - | - | 0.05 | - | 0.1 |

| | | | | | | | |
|---|---|---|---|---|---|---|---|
| Unit: g | | | | | | | |

After mixing, the different formulas (shown in Table 2) were tested with several bonding performance tests (substrate ABS, skin: PVC foil). The procedure was as follows:
- Step 1: spray the mixture on the ABS substrate, control the mixture weight to be 100-120g/m²;
- Step 2: place the coated ABS substrate in 50°C oven for 10 min;
- Step 3: heat press for the skin and ABS lamination (heat press condition: upper panel 70°C, lower panel 70°C, pressure 2 MPa, hold for 10 s);
- Step 4: 180° peel test under different conditions using Universal Testing Machine (UTM) (available from Instron).

The results are shown in Table 3.

**Table 3**

| Peeling strength | 1 | 2 | 3 | 4 | 5 | 6 |
|---|---|---|---|---|---|---|
| 1 min | 57.12 | 51.97 | 63.11 | 62.55 | 63.59 | 62.56 |
| 10 min | 91.26 | 63.53 | 92.11 | 93.00 | 91.91 | 91.50 |
| 30 min | 93.40 | 87.17 | 113.80 | 111.56 | 110.79 | 110.85 |
| 1 day | 95%SF | 100%SF | 97.3%SF | 96.8%SF | 96.5%SF | 97.0%SF |
| 1 day, 90°C, 30min | 47.13 | 39.69 | 60.82 | 60.15 | 59.66 | 59.96 |

| | | | | | | |
|---|---|---|---|---|---|---|
| Strength unit: N/50mm SF=Substrate Failure | | | | | | |

All samples are found to be acceptable in terms of initial strength (1 min), final strength (1 day) and aging strength (1 day, 90C°, 30min). Further, all samples are found to have high percentages of Substrate Failure (SF), which indicate that the adhesive itself provides sufficient strength.

### Comprehensive study on Example 3

The above Example 3 was selected for a comprehensive evaluation. The substrates and evaluation method were the same as above for the bonding performance test. The additional conditions are listed as follow:
1) 8 cycles of the following sequence:
   Raise the temperature from 23°C (50% relative humidity (RH)) to 80°C (80% RH) in 60 min;
   Stay at 80°C (80% RH) for 240 min;
   Decrease the temperature from 80°C (80% RH) to -40°C in 120 min;
   Stay at -40°C for 240 min; and
   Raise the temperature from -40°C to 23°C (50% RH) in 60 min.
2) 50°C, 95% RH, 4 days, tested when cooled to room temperature (RT)
3) 110°C, 1 day
4) tested at -30°C

The results are shown in Table 4.

**Table 4**

| Peeling strength | Example 3 |
|---|---|
| 1) Cycle | 182.93/75% SF |
| 2) 50°C, 95% RH, 4 days | 87.7%SF |
| 3) 110°C, 1 day | 137.92 |
| 4) -30°C | 100%SF |

| | |
|---|---|
| Strength unit: N/50mm | |

Example 3 fully complies with the general specifications requirement of automobile manufacturers, and even the strength at high temperature is very satisfactory.

## Claims

1. A kit comprising:
- a component (A) comprising an aqueous dispersion comprising at least one polymer;
- a component (B) comprising at least one curing agent; and
- a component (C) comprising at least one coloring agent.

2. The kit according to claim 1, comprising:
- 100 parts by mass of the component (A);
- 2 to 10 parts, preferably 3 to 8 parts, and more preferably 3 to 7 parts by mass of the component (B); and
- 0.05 to 1 parts, preferably 0.08 to 0.9 parts, and more preferably 0.1 to 0.8 parts by mass of the component (C).

3. The kit according to claim 1 or 2, wherein the polymer of the component (A) comprises at least one of polyurethane, polyacrylate, vinyl-based copolymer, and epoxy resin.

4. The kit according to any one of claims 1 to 3, wherein the polymer of the component (A) comprises a combination of polyurethane and vinyl acetate-ethylene.

5. The kit according to any one of claims 1 to 4, wherein the curing agent of the component (B) comprises an isocyanate compound.

6. The kit according to any one of claims 1 to 4, wherein the curing agent of the component (B) comprises a silane compound.

7. The kit according to any one of claims 1 to 6, wherein the three components (A, B, C), in combination, have a total content of volatile organic compound (VOC) of less than 10 g/L, preferably less than 5 g/L.

8. The kit according to any one of claims 1 to 7 wherein the component (C) is in liquid form.

9. The kit according to any one of claims 1 to 8, wherein the component (A) and/or the component (C) comprises one or more additives selected from biocides, pH adjusting agents, defoaming agents, wetting agents, thickening agents, fillers, and mixtures thereof.

10. The kit according to any one of claims 1 to 9, wherein the three components (A, B, C) are in separate containers.

11. The use of the kit according to any one of claims 1 to 10, as an adhesive for bonding two substrates together.

12. The use of the kit according to any one of claims 1 to 10, as a coating for coating a surface of a substrate.

13. A method for bonding two substrates or for coating a surface of a substrate, comprising:
- mixing together a component (A) comprising an aqueous dispersion comprising at least one polymer, a component (B) comprising at least one curing agent, and a component (C) comprising at least one coloring agent;
- applying said mixture on a surface of a substrate; and
- optionally bringing said surface into contact with a surface of an additional substrate.

14. The method according to claim 13 wherein the three components (A, B, C) are as provided by the kit according to any one of claims 1 to 10.

15. An article comprising at least one layer formed by the use according to claim 11 or claim 12, or the method according to claim 13 or 14.
